# DEMANDE DE BREVET EUROPEEN

(11) **EP 4 685 576 A1**
(43) Date de publication de la demande: **28.01.2026**
(21) Numéro de dépôt: 24191178.3
(22) Date de dépôt: 26.07.2024
(51) Int. Cl.: G04B 11/00, G04B 19/24, G04B 19/26, G04B 27/00

(54) **MÉCANISME DE LIAISON CINÉMATIQUE POUR MOUVEMENT HORLOGER**

(71) Demandeur: Montres Breguet S.A., 1344 L'Abbaye (CH)
(72) Inventeur: MACE, Jérôme, 1342 Le Pont (CH)
(74) Mandataire: ICB SA

(57) **Abrégé**

L'invention concerne un mécanisme de liaison cinématique (10) pour mouvement horloger (60), destiné à être agencé entre un actionneur (20) et un récepteur (30), caractérisé en ce qu'il comprend une bascule menante (11) destinée à être entraînée en rotation par l'actionneur (20) selon un axe A1, une bascule menée (12) mobile en rotation selon un axe A2 non parallèle à l'axe A1, la bascule menée (12) étant reliée cinématiquement à la bascule menante (11) par un module de tringlerie (13) configuré de sorte que la rotation de la bascule menante (11) entraîne la rotation de la bascule menée (12), cette dernière étant destinée à coopérer avec le récepteur (30) lorsqu'elle est entraînée en rotation.

## Description

### Domaine technique de l'invention

L'invention relève du domaine de l'horlogerie, et notamment des mouvements horlogers.

Plus particulièrement, l'invention concerne un mouvement horloger comprenant un module de liaison cinématique interposé entre un dispositif de commande de fonctions et un dispositif d'affichage d'indications temporelles.

### Arrière-plan technologique

Les montres à complications peuvent présenter une conception particulièrement complexe.

En particulier, le mouvement horloger de ces montres est généralement composé d'un nombre de pièces pouvant être élevé et pouvant être animées de cinématiques complexes.

Dans ce cadre, il est nécessaire de veiller à ce que les cinématiques des pièces en mouvement soient optimisées afin d'entraîner une consommation énergétique la plus faible possible et de sorte que la course de ces pièces nécessite un volume le plus compact possible au sein du mouvement horloger.

### Résumé de l'invention

L'invention répond aux besoins précités et concerne à cet effet, un mécanisme de liaison cinématique pour mouvement horloger, destiné à être agencé entre un actionneur et un récepteur.

Le mécanisme de liaison cinématique comprend une bascule menante destinée à être entraînée en rotation par l'actionneur selon un axe A1, une bascule menée mobile en rotation selon un axe A2 non parallèle à l'axe A1, la bascule menée étant reliée cinématiquement à la bascule menante par un module de tringlerie configuré de sorte que la rotation de la bascule menante entraîne la rotation de la bascule menée, cette dernière étant destinée à coopérer avec le récepteur lorsqu'elle est entraînée en rotation.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le module de tringlerie comporte une bielle comportant une tête par laquelle elle est fixée à un bras mené de la bascule menante et un pied par lequel elle est fixée à un bras menant de la bascule menée.

Dans des modes particuliers de réalisation, le pied de la bielle est fixé au bras menant de la bascule menée par l'intermédiaire d'une biellette. La biellette comprend une première extrémité fixée de façon mobile en rotation autour du bras menant de la bascule menée selon un axe A3 et une seconde extrémité fixée à la bielle de manière à former une articulation autorisant une rotation selon un axe A4 sensiblement orthogonal à l'axe A3.

Dans des modes particuliers de réalisation, la tête de la bielle comporte un trou oblong s'étendant en longueur selon un axe longitudinal de la bielle, et dans lequel est engagé un élément de guidage porté par le bras mené de la bascule menante de sorte que l'élément de guidage évolue dans le trou oblong lorsque la bascule menante est entraînée en rotation.

Selon un autre objet, la présente invention concerne un mouvement horloger comprenant un mécanisme de liaison cinématique tel que décrit précédemment, interposé cinématiquement entre un organe de commande de fonctions du mouvement horloger destiné à être actionné par un utilisateur et un dispositif d'affichage d'indications temporelles.

Le mécanisme de liaison cinématique étant configuré de sorte à agir sur le dispositif d'affichage d'indications temporelles lorsque l'organe de commande est sollicité.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'un mécanisme de liaison cinématique selon un exemple préféré de réalisation de l'invention ;
- la figure 2 représente un schéma bloc du mouvement horloger selon l'invention comprenant le mécanisme de liaison cinématique de la figure 1.

On note que les figures ne sont pas nécessairement dessinées à l'échelle pour des raisons de clarté.

### Description détaillée de l'invention

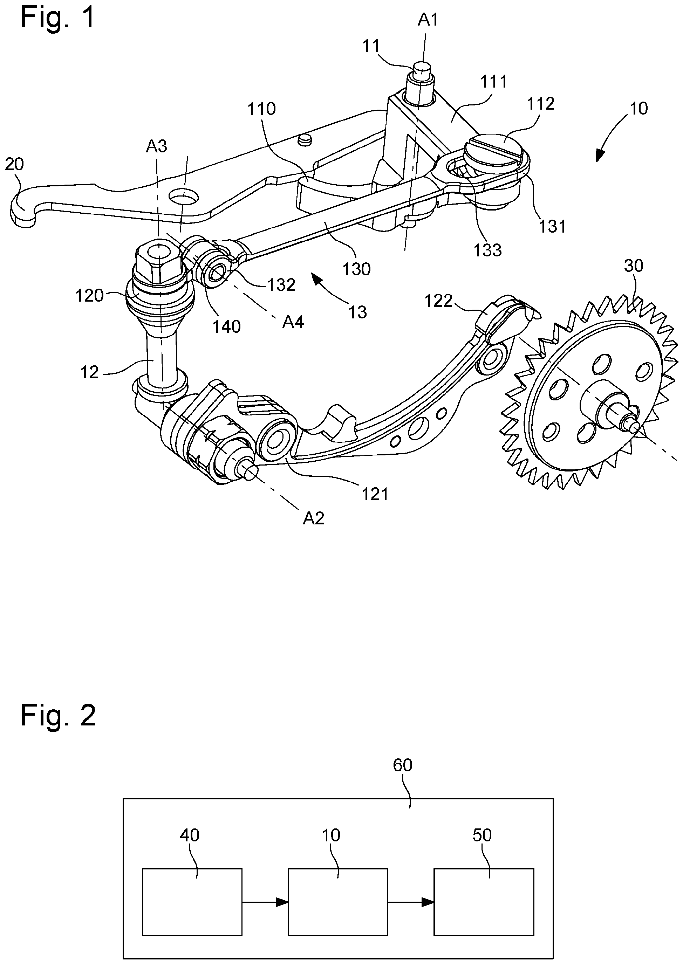

L'invention représentée dans un exemple préféré de réalisation sur la figure 1 concerne un mécanisme de liaison cinématique 10 pour mouvement horloger 60, destiné à être agencé entre un actionneur 20 et un récepteur 30.

Dans un cas particulier d'application de l'invention, l'actionneur 20 peut être relié à un organe de commande 40 d'une fonction du mouvement horloger 60 destiné à être sollicité par un utilisateur, par exemple un poussoir ou une couronne. Par ailleurs, le récepteur 30 peut être relié à un dispositif d'affichage d'indications temporelles 50, par exemple un dispositif d'affichage de quantième, du jour de semaine, de mois et/ou de phase de lune, etc.

De façon connu par l'homme du métier, la notion de liaison cinématique caractérise l'aptitude à transmettre un mouvement, c'est-à-dire à entraîner en déplacement des éléments liés cinématiquement. Le mécanisme de liaison cinématique 10 est donc apte à entraîner en déplacement le récepteur 30 à la suite d'une sollicitation de l'actionneur 20. Cet aspect de l'invention est décrit en détail dans la suite du texte dans un exemple préféré de réalisation. L'actionneur 20 peut présenter la forme d'un levier, d'une bascule, d'une tige ou toute autre forme appropriée.

Comme le montrent les figures, le mécanisme de liaison cinématique 10 comprend une bascule menante 11 destinée à être entraînée en rotation par l'actionneur 20 selon un axe A1, entre une position de repos et une position active.

En particulier, la bascule menante 11 peut comporter un bras menant 110 sur lequel l'actionneur 20 est destiné à appliquer un effort lorsqu'il est sollicité par un utilisateur, de sorte à provoquer la rotation de ladite bascule menante 11. Dans l'exemple visible sur les figures, l'actionneur 20 prend la forme d'une bascule.

Le mécanisme de liaison cinématique 10 comporte en outre une bascule menée 12 mobile en rotation selon un axe A2 non parallèle à l'axe A1. La bascule menante 11 est reliée cinématiquement à la bascule menée 12 par un module de tringlerie 13 de sorte que la rotation de la bascule menante 11 entraîne la rotation de la bascule menée 12.

Lorsqu'elle est entraînée en rotation, la bascule menée 12 est destinée à coopérer avec le récepteur 30 pour le déplacer.

On comprend ici que les bascules menante 11 et menée 12 sont destinées à évoluer entre une position de repos et une position active, l'une et l'autre dans le même temps.

Avantageusement et de manière connue en tant que tel par l'homme du métier, les bascules menante 11 et menée 12 sont rappelées en position de repos par un ou des organes de rappel.

Comme le montre la figure 1 dans un exemple préféré de réalisation de l'invention, le module de tringlerie 13 comporte une bielle 130 dotée d'une tête 131 par laquelle elle est solidaire d'un bras mené 111 de la bascule menante 11 et un pied 132 par lequel elle est solidaire d'un bras menant 120 de la bascule menée 12. La bielle 130 est liée à la bascule menante 11 et à la bascule menée 12 de sorte à présenter un degré de mobilité en rotation par rapport à ces dernières.

Afin de présenter les degrés de mobilité nécessaires dans l'exemple préféré de réalisation, la tête de la bielle 130 comporte un trou oblong 133 s'étendant en longueur selon un axe longitudinal de la bielle 130, et dans lequel est engagé avec un jeu mécanique un élément de guidage 112 porté par le bras mené 111 de la bascule menante 11. L'élément de guidage 112 peut être constitué par une goupille ou une vis, tel que visible sur la figure 1.

Par ailleurs, le pied 132 de la bielle 130 est fixé au bras menant 120 de la bascule menée 12 par l'intermédiaire d'une biellette 140. La biellette 140 comprend une première extrémité fixée de façon mobile en rotation autour du bras menant 120 de la bascule menée 12 selon un axe A3 et une seconde extrémité fixée à la bielle 130 de manière à former une articulation autorisant une rotation selon un axe A4 sensiblement orthogonal à l'axe A3. Dans l'exemple de réalisation représenté sur les figures, l'axe A3 est confondu avec un axe longitudinal selon lequel s'étend le bras menant 120 de la bascule menée 12.

Ainsi, lorsque la bascule menante 11 est entraînée depuis sa position de repos jusqu'à sa position active, l'élément de guidage 112 décrit une trajectoire curviligne centrée sur l'axe A1 et applique un effort contre l'une des extrémités du trou oblong 133 de sorte à provoquer la rotation de la bascule menée 12 jusqu'à sa position active. Lors de cette rotation, la bielle 130 pivote par rapport à la biellette 140 selon l'axe A4 d'un angle dépendant de l'angle de rotation de la bascule menée 12. Lorsqu'elle transmet le mouvement de la bielle 130 à la bascule menée 12, du fait de la trajectoire curviligne de l'élément de guidage 112, la biellette 140 pivote également selon l'axe A3 par rapport à la bascule menée 12.

Dans l'exemple de réalisation représenté sur les figures, la bascule menée 12 comporte un bras mené 121 prévu pour coopérer avec le récepteur 30 lorsque la bascule menée 12 atteint sa position active. Plus précisément, comme visible sur les figures, le bras mené 121 peut comporter un cliquet 122 à une extrémité libre, par lequel il entraîne le récepteur 30, ici sous la forme d'une roue dentée, dans une rotation d'un pas, et grâce auquel il n'agit pas sur le récepteur lorsque la bascule menée 12 revient en position de repos.

En résumé, dans un exemple préféré de réalisation de l'invention, dans le mouvement horloger 60, le mécanisme de liaison cinématique 10 est interposé cinématiquement entre l'organe de commande 40 de fonctions du mouvement horloger 60 et le dispositif d'affichage d'indications temporelles 50, comme représenté schématiquement sur la figure 2.

Le mécanisme de liaison cinématique 10 est configuré de sorte à agir sur le dispositif d'affichage d'indications temporelles 50 lorsque l'organe de commande 40 est sollicité, tel que l'indiquent les flèches de la figure 2.

La présente invention permet avantageusement de pouvoir transmettre un mouvement d'un actionneur 20 à un récepteur 30 qui sont mobiles dans des plans distincts.

La présente invention peut constituer un mécanisme de correction, par exemple de quantième, du jour de semaine, de mois et/ou de phase de lune, etc.

Il est envisageable que la bascule menée 12 puisse être entraînée par un organe d'entraînement (non représenté sur les figures) tel qu'une came d'animation de forme spiralée, solidaire en rotation d'une roue d'entraînement coaxiale engrenée par exemple par un rouage du mouvement horloger, notamment par une roue de vingt-quatre heures si le dispositif d'affichage d'indications temporelles 50 est un quantième. La came d'animation est alors entraînée séquentiellement en rotation d'un tour par jour. Dans chacune de ses séquences de rotation, elle provoque le déplacement de la bascule menée 12 dans la position active. La bascule menée 12 est contrainte à revenir dans la position de repos par l'organe élastique tel que cité précédemment, lorsqu'elle n'est pas sollicitée en déplacement par la came d'animation.

Une telle came d'animation et son interaction avec la bascule menée sont par exemple décrites dans les demandes de brevet CH720214 et CH720210.La rotation de la bascule menée 12 vers sa position active, lorsqu'elle est provoquée par la came d'animation, entraîne le déplacement de la bielle 130, et entraîne le déplacement du trou oblong 133 relativement à l'élément de guidage 112 sans affecter ce dernier. Ainsi, le bras mené 111 n'est pas soumis à l'action de la came d'animation grâce au trou oblong 133 de la bielle 130.

De manière plus générale, il est à noter que les modes de mise en oeuvre et de réalisation considérés ci-dessus ont été décrits à titre d'exemples non limitatifs, et que d'autres variantes sont par conséquent envisageables.

## Revendications

1. Mécanisme de liaison cinématique (10) pour mouvement horloger (60), destiné à être agencé entre un actionneur (20) et un récepteur (30), **caractérisé en ce qu'**il comprend une bascule menante (11) destinée à être entraînée en rotation par l'actionneur (20) selon un axe A1, une bascule menée (12) mobile en rotation selon un axe A2 non parallèle à l'axe A1, la bascule menée (12) étant reliée cinématiquement à la bascule menante (11) par un module de tringlerie (13) configuré de sorte que la rotation de la bascule menante (11) entraîne la rotation de la bascule menée (12), cette dernière étant destinée à coopérer avec le récepteur (30) lorsqu'elle est entraînée en rotation.

2. Mécanisme de liaison cinématique (10) selon la revendication 1, dans lequel le module de tringlerie (13) comporte une bielle (130) comportant une tête (131) par laquelle elle est fixée à un bras mené (111) de la bascule menante (11) et un pied (132) par lequel elle est fixée à un bras menant (120) de la bascule menée (12).

3. Mécanisme de liaison cinématique (10) selon la revendication 2, dans lequel le pied (132) de la bielle (130) est fixé au bras menant (120) de la bascule menée (12) par l'intermédiaire d'une biellette (140), ladite biellette (140) comprenant une première extrémité fixée de façon mobile en rotation autour du bras menant (120) de la bascule menée (12) selon un axe A3 et une seconde extrémité fixée à la bielle (130) de manière à former une articulation autorisant une rotation selon un axe A4 sensiblement orthogonal à l'axe A3.

4. Mécanisme de liaison cinématique (10) selon la revendication 2, dans lequel la tête (131) de la bielle (130) comporte un trou oblong (133) s'étendant en longueur selon un axe longitudinal de la bielle (130), et dans lequel est engagé un élément de guidage (112) porté par le bras mené (111) de la bascule menante (11) de sorte que l'élément de guidage (112) évolue dans le trou oblong (133) lorsque la bascule menante (11) est entraînée en rotation.

5. Mouvement horloger (60) comprenant un mécanisme de liaison cinématique (10) selon l'une des revendications 1 à 4, interposé cinématiquement entre un organe de commande (40) de fonctions du mouvement horloger (60) destiné à être actionné par un utilisateur et un dispositif d'affichage d'indications temporelles (50), le mécanisme de liaison cinématique (10) étant configuré de sorte à agir sur le dispositif d'affichage d'indications temporelles (50) lorsque l'organe de commande est sollicité.
